# FASCICULE DE BREVET EUROPEEN

(11) **EP 3 245 082 B1**
(45) Date de publication et mention de la délivrance du brevet: **22.05.2019**
(21) Numéro de dépôt: 15823633.1
(22) Date de dépôt: 09.12.2015
(51) Int. Cl.: B60J 5/04

(54) **PORTIERE DE VEHICULE AUTOMOBILE AVEC RAIDISSEUR**
KRAFTFAHRZEUGTÜR MIT VERSTEIFUNG
MOTOR VEHICLE DOOR WITH STIFFENER

(30) Priorité: 16.01.2015 FR 1550364
(43) Date de publication de la demande: 22.11.2017
(73) Titulaire: PSA Automobiles SA, 78300 Poissy (FR)
(72) Inventeur: FONFREDE, Stéphane, 90000 Belfort (FR)
(86) Numéro de dépôt international: PCT/FR2015/053400
(87) Numéro de publication internationale: WO 2016/113475

(56) Documents cités:
- EP-A2- 1 405 746
- DE-A1- 4 331 616
- FR-A1- 2 904 792
- FR-A1- 2 937 288
- FR-A1- 2 938 484
- FR-A1- 2 995 258

## Description

L'invention a trait au domaine des véhicules automobiles. Plus particulièrement, l'invention a trait à l'aptitude d'un véhicule automobile à absorber de l'énergie en cas de choc latéral du véhicule. Plus particulièrement, l'invention a trait à une portière latérale de véhicule automobile et à un véhicule automobile correspondant, préférentiellement à quatre portes latérales.

Une portière latérale de véhicule automobile comprend généralement sur son flanc arrière une serrure destinée à verrouiller la portière ainsi qu'une poignée de commande manuelle de la serrure pour l'ouverture de la portière La poignée de commande est généralement située en avant de la serrure et à hauteur de la main, la portière comprenant, en outre, un câble de commande reliant la commande avec la serrure à travers un passage de câble. Une portière est, en outre, généralement constituée d'une paroi extérieure ainsi qu'une doublure ou paroi intérieure ; la doublure formant les flancs latéraux de la portière, la serrure étant en appui sur le flanc latéral arrière, les charnières de portière étant situées sur le flanc avant opposé. Sur des modèles particuliers de véhicule automobiles, la disposition de la serrure peut être inversée et être fixée sur le flanc avant de la doublure de porte.

En cas de choc latéral du véhicule automobile, la paroi extérieure de la portière se déforme et peut entrainer la déformation du passage de câble pour la commande de la serrure. Cette déformation peut générer une traction sur le câble et ainsi déverrouiller la serrure de la portière. Or, les prescriptions actuelles pour la réalisation de véhicule automobile et leur homologation exigent que la portière latérale ne doit pas s'ouvrir en cas de choc latéral de sorte à ne pas accroître les dommages sur les occupants du véhicule, sur des piétons ou d'autres véhicules.

Le document de brevet FR 2 904 792 A1 divulgue une portière latérale de véhicule comprenant un raidisseur appliqué sur la face intérieure de la paroi extérieure de la portière et s'étendant verticalement dans la portière. Le raidisseur est un embouti comprenant une portion horizontale longeant le bord supérieur de la portière au niveau du lèche vitre ainsi qu'une portion inférieure s'étendant verticalement à mi-hauteur de la portière, l'embouti formant un Y. L'enseignement est intéressant en ce que le raidisseur offre une raideur importante apte à rigidifier la zone de l'ouvrant sur laquelle il est situé. La solution de cet enseignement n'est cependant applicable que pour une zone située longitudinalement à une position centrale dans la portière, à distance de la zone de montage de la poignée de commande d'ouverture de serrure interférant au niveau de la paroi extérieure de la portière.

Le document de brevet EP 1 405 746 B1 divulgue une configuration de portières où le véhicule est dépourvu de montant intermédiaire entre les portières avant et arrière. Dans cette configuration, la portière arrière est sensiblement plus courte que la portière avant. Les portières avant et arrière comprennent, chacune, un raidisseur en forme de S s'étendant verticalement le long du flanc arrière ou avant, respectivement, plus précisément une première branche du S étant fixée au fond de la doublure, le corps du S longeant le flanc de la portière. Une paroi extérieure est assemblée à la doublure. La portière avant comprend, en outre, un deuxième raidisseur, préférentiellement un troisième raidisseur, s'étendant dans la direction longitudinale du véhicule et longeant la paroi extérieure. La ou les raidisseurs longitudinaux sont fixés au flanc arrière de la doublure de portière via la deuxième branche du raidisseur en forme de S. L'enseignement de ce document est intéressant en ce que le raidisseur en forme de S est apte à rigidifier les zones de fixation des serrures, correspondant au poteau intermédiaire absent. Le ou les raidisseurs longitudinaux sont disposés dans les portières avant et sont destinés à absorber l'énergie de choc latéral en prenant appui sur les raidisseurs verticaux en forme de S.

Le document de brevet FR 2 937 288 B1 divulgue une portière arrière de véhicule automobile comprenant une paroi intérieure assemblée à une paroi extérieure. La paroi intérieure comprend un flanc latéral arrière, la portière comprenant une serrure en appui contre ledit flanc. La portière comprend, en outre, un raidisseur longitudinal s'étendant le long de la face intérieure de la paroi extérieure. Le raidisseur s'étend dans une direction légèrement inclinée par rapport à l'horizontal, une première extrémité étant fixée au flanc opposé à la serrure, celui comprenant les charnières de portière. La deuxième extrémité du raidisseur comprend une zone d'affaiblissement apte à absorber par déformation de l'énergie de choc latéral. Cette deuxième extrémité est fixée légèrement en retrait du flanc arrière, au fond de la paroi intérieure. Cet enseignement est intéressant en ce que la déformation de la portière se concentre au niveau de la zone d'affaiblissement juste à proximité du flanc portant la serrure ce qui limite en l'occurrence la déformation dudit flanc. La zone de réduction de la déformation de la portière est cependant limitée.

Le document de brevet FR 2 995 258 A1 divulgue une portière latérale de véhicule comprenant un raidisseur s'étendant le long de la face intérieure de la paroi extérieure de la portière.

L'invention a pour objectif de proposer une solution palliant au moins un inconvénient de l'état de la technique, en particulier de l'état de la technique susmentionné. Plus particulièrement, l'invention a pour objectif de proposer une solution de concept simple pour limiter l'ouverture intempestive de la portière lors d'un choc latéral. Plus particulièrement, l'invention a pour objectif de limiter la déformation de la portière au niveau du câble de commande reliant la poignée de commande et la serrure.

L'invention a pour objet une portière de véhicule automobile comprenant : une paroi arrière avec une zone de montage d'une serrure ; une paroi extérieure avec une zone de montage d'une poignée de commande manuelle de la serrure ; un raidisseur s'étendant le long de la face intérieure de la paroi extérieure ; remarquable en ce que le raidisseur s'étend à l'avant de la zone de montage de la poignée de commande, depuis la paroi arrière jusqu'à un bord supérieur de la paroi extérieure, et comprend au moins une zone d'affaiblissement.

Selon un mode avantageux de l'invention, la ou les zones d'affaiblissement sont situées à distance du milieu du raidisseur, préférentiellement à une distance du milieu qui est supérieure à un quart de la longueur totale du raidisseur.

Selon un mode avantageux de l'invention, le raidisseur est une bande de tôle de section transversale profilée, la ou au moins une des zones d'affaiblissement ayant une section transversale généralement droite et/ou une section longitudinale en forme de U.

Selon l'invention, le raidisseur comprend deux zones d'affaiblissement de part et d'autre d'une portion centrale dépourvue de zone d'affaiblissement.

Selon un mode avantageux de l'invention, la portière comprend la serrure sur la paroi arrière, la poignée de commande sur la paroi extérieure et un câble de commande reliant la poignée à la serrure, ledit câble s'étendant majoritairement à hauteur de la portion centrale du raidisseur.

Selon un mode avantageux de l'invention, la ou les zones d'affaiblissement ont un moment quadratique en flexion inférieure à 50%, préférentiellement à 30%, du moment quadratique moyen du raidisseur en dehors de la ou des zones d'affaiblissement.

Selon un mode avantageux de l'invention, le raidisseur est à une distance de moins de 15 cm, préférentiellement 10 cm, de la zone de montage de la poignée de commande.

Selon un mode avantageux de l'invention, la portière est une portière arrière, la paroi arrière comprenant une portion supérieure généralement droite et une portion inférieure généralement courbée en vue d'épouser un passage de roue arrière de véhicule, le raidisseur étant fixé à ladite portion inférieure.

Selon un mode avantageux de l'invention, le raidisseur est incliné par rapport à la verticale d'un angle compris entre 5° et 70°, préférentiellement entre 10° et 45°.

Selon un mode avantageux de l'invention, les extrémités du raidisseur sont fixées aux bords latéral et supérieur de la portière, les zones d'affaiblissement étant situées à distance desdites extrémités de moins de 35% de la longueur du raidisseur, préférentiellement de moins de 25%.

Selon un mode avantageux de l'invention, le raidisseur est en contact avec la face intérieure de la paroi extérieure. Le raidisseur est préférentiellement attaché, notamment par collage, à la face intérieure de la paroi extérieure.

Selon un mode avantageux de l'invention, la portion centrale est fixée, préférentiellement par collage, à la face intérieure de la paroi extérieure.

Selon un mode avantageux, la portion centrale est de section profilée en Ω.

Selon un mode avantageux de l'invention, le raidisseur est en acier de limite d'élasticité comprise entre 150MPa et 400MPa.

Selon un mode avantageux de l'invention, la ou les zones d'affaiblissement s'étendent dans le raidisseur sur une distance comprise entre 10mm et 70mm, préférentiellement comprise entre 20mm et 40mm.

Selon un mode avantageux de l'invention, le raidisseur est une tôle métallique pliée ou emboutie au niveau de la ou des zones d'affaiblissement, la section profilée étant préférentiellement réalisée par emboutissage.

L'invention a également trait à un véhicule automobile comprenant une ou plusieurs portières latérales, remarquable en ce que la ou au moins une des portières est conforme à l'invention.

Les mesures de l'invention sont intéressantes en ce que la portière est apte à absorber l'énergie d'un choc latéral du véhicule de sorte à limiter sa déformation au niveau des zones où sont situés la commande, le câble de commande et la serrure de fermeture de la portière. En effet, le raidisseur situé en avant desdites zones crée un filtre de déformation apte à orienter la déformation de la paroi extérieure en dessous et/ou au-dessus desdites zones. Par ailleurs, le renfort de la portière est de concept simple et est économique à réaliser.

D'autres caractéristiques et avantages de la présente invention seront mieux compris à l'aide de la description et des dessins parmi lesquels :
- La figure 1 est une vue en perspective d'une portière de véhicule automobile conforme à l'invention ;
- La figure 2 est une vue de la portière de la figure 1 après un choc latéral du véhicule contre ladite portière ;
- La figure 3 est une vue de la portière de la figure 2 au niveau de la commande d'ouverture ;
- La figure 4 est une section transversale du raidisseur de la portière des figures 2 et 3 ;

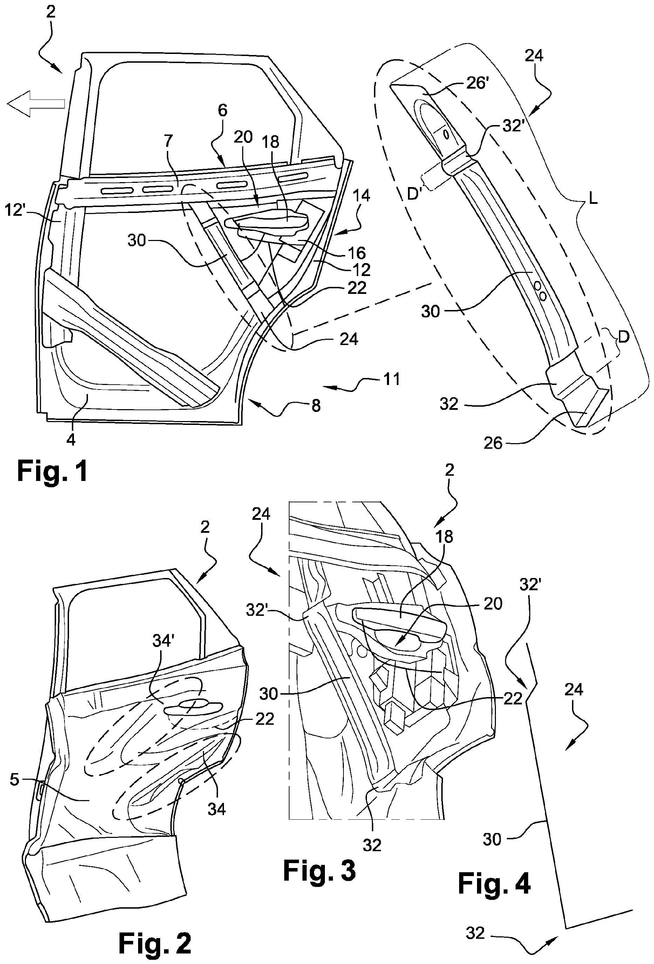

La figure 1 est une vue en perspective d'une portière 2 de véhicule automobile conforme à l'invention. La portière 2 comprend une paroi arrière 4, couramment appelée la doublure de porte, ainsi qu'une paroi extérieure assemblée à la doublure 4. La paroi extérieure n'est cependant pas représentée de manière à visualiser la structure de la portière 2 entre les deux parois. La portière 2 est en l'occurrence une portière arrière qui comprend une portion supérieure 6 droite et une portion inférieure 8 qui est courbée pour épouser un passage de roue arrière de véhicule ; la courbure de la portion inférieure 8 est au niveau de la partie inférieure du bord latéral 11 correspondant de la portière 2. La doublure 4 forme des flancs latéraux 12 et 12' : le flanc latéral arrière 12 (à droite sur l'image) comprenant une zone de montage 14 d'une serrure 16 de fermeture de la portière 2 ; le flanc latéral avant 12' (à gauche sur l'image) reçoit les charnières de fixation (non représentées) de la portière 2 au véhicule. La portière comprend également une poignée de commande 18 qui est située dans une zone de montage 20 de la paroi extérieure en avant de la serrure 16 ; « en avant » s'entend par rapport à la direction avant du véhicule indiquée sur l'image par une flèche. Cette zone de montage 20 est représentée sur l'image de sorte à pouvoir situer la position de la poignée 18 sur la portière 2. Cette dernière comprend, enfin un câble de commande 22 reliant la poignée 18 à la serrure 16. La portière 2 comprend un raidisseur 24 s'étendant à l'avant de la zone de montage 20 de la poignée de commande 18. Le raidisseur 24 est présenté seul en agrandi à droite de l'image principale de la portière 2. Le raidisseur 24 est orienté de manière inclinée par rapport à la direction verticale et ce d'un angle compris en l'occurrence entre 10° et 25°, il est fixé à son extrémité inférieure 26 à la portion inférieure courbée 8 de la portière 2, et à son extrémité supérieure 26' à la portion supérieure 6 droite de la portière. Plus précisément, l'extrémité inférieure 26 est fixée à la doublure 4 de la portière 2 et l'extrémité supérieure 26' est fixée au bord 7 de la paroi extérieure (non représentée) en l'occurrence via un bandeau intermédiaire s'étendant dans la direction longitudinale du véhicule. Dans la section de la portière, le raidisseur 24 s'étend le long de la face intérieure de la paroi extérieure. En ce qui concerne le positionnement du raidisseur 24 dans la direction longitudinale du véhicule, il est à une distance de moins de 15cm, préférentiellement 10cm, de la zone de montage 20 de la poignée de commande 18. On peut noter que le raidisseur 24 comprend une portion centrale 30 de section transversale profilé. Le raidisseur est, en outre, en contact au niveau de sa portion centrale 30 avec la face intérieure de la paroi extérieure ; il peut être attaché, notamment par collage, à la face intérieure de la paroi extérieure. On peut observer que la zone de montage 20 de la poignée de commande 18 ainsi que le câble de commande 22 sont majoritairement à hauteur de cette portion centrale 30 du raidisseur 24.

En observant le raidisseur 24 sur la portion agrandie de l'image, on voit qu'il est formé dans une bande de tôle de section transversale profilée. Le raidisseur 24 comprend au moins une zone d'affaiblissement, en l'occurrence il comprend deux zones d'affaiblissement 32 et 32' opposées à la zone centrale 30 de section profilée et qui est dépourvue de zone d'affaiblissement. La portion centrale 30 peut avoir une section profilée en Ω. La section transversale des zones d'affaiblissement 32 et 32' est généralement droite ; leur section longitudinale peut être en forme de U. Ces zones d'affaiblissement 32 et 32' sont situées à une distance du milieu du raidisseur qui est supérieure à un quart de la longueur totale « L » du raidisseur, elles sont par ailleurs situées par rapport aux extrémités 26 et 26' du raidisseur à moins de 35% de la longueur « L » du raidisseur 24 ; elles peuvent s'étendre dans le raidisseur sur une distance « D » et « D' » comprise entre 10mm et 70mm, préférentiellement comprise entre 20mm et 40mm. Ces zones d'affaiblissement 32 et 32' ont un moment quadratique en flexion inférieure à 50%, préférentiellement à 30%, du moment quadratique moyen du raidisseur 24 en dehors des zones d'affaiblissement. Cette mesure de l'invention est intéressante pour donner au raidisseur 24 l'aptitude d'absorber l'énergie d'un choc latéral par la déformation du raidisseur au niveau des zones d'affaiblissement. Le raidisseur 24 est une tôle pliée ou emboutie au niveau des deux zones d'affaiblissement 32 et 32', les sections profilées du raidisseur étant préférentiellement réalisées par emboutissage. Le raidisseur peut être en acier de limite d'élasticité compris entre 150MPa à 400MPa.

La figure 2 est une vue de la portière 2 conforme à l'invention après un choc latéral du véhicule contre ladite portière. On peut observer deux déformations principales 34 et 34' de la paroi extérieure 5 de la portière 2, lesdites déformations s'étendant majoritairement dans la direction longitudinale du véhicule en dessous et au-dessus de la zone de passage du câble 22 de commande (représenté en pointillés) d'ouverture de la serrure.

La figure 3 est une vue similaire à la vue de la figure 2, la paroi extérieure n'est cependant pas représentée. Les zones d'affaiblissement 32 et 32' du raidisseur 24 ont absorbé une portion de l'énergie du choc latéral du véhicule. La portion centrale 30 du raidisseur 24 en contact ou attachée à la paroi extérieure de la portière n'est pas déformée et protège de manière efficace la zone de montage 20 de la commande d'ouverture 18 de la portière 2 ainsi que le câble d'ouverture 22.

La figure 4 est une section du raidisseur 24 après un choc latéral du véhicule contre la portière conforme à l'invention. On peut voir ici un exemple de profil de déformation du raidisseur, les zones d'affaiblissement 32 et 32' étant déformées, la portion centrale 30 du raidisseur étant exempte de déformation.

## Revendications

1. Portière (2) de véhicule automobile comprenant :
- une paroi arrière (4) avec une zone de montage (14) d'une serrure (16) ;
- une paroi extérieure (5) avec une zone de montage (20) d'une poignée de commande manuelle (18) de la serrure (16) ;
- un raidisseur (24) s'étendant le long de la face intérieure de la paroi extérieure (5) ;
**caractérisée en ce que**
le raidisseur (24) s'étend à l'avant de la zone de montage (20) de la poignée de commande (18), depuis la paroi arrière (4) jusqu'à un bord supérieur (7) de la paroi extérieure (5), et comprend deux zones d'affaiblissement (32 ; 32') de part et d'autre d'une portion centrale (30) dépourvue de zone d'affaiblissement.

2. Portière (2) selon la revendication 1, **caractérisée en ce que** la ou les zones d'affaiblissement (32, 32') sont situées à distance du milieu du raidisseur (24), préférentiellement à une distance du milieu qui est supérieure à un quart de la longueur totale (L) du raidisseur.

3. Portière (2) selon l'une des revendications 1 et 2, **caractérisée en ce que** le raidisseur (24) est une bande de tôle de section transversale profilée, la ou au moins une des zones d'affaiblissement (32, 32') ayant une section transversale généralement droite et/ou une section longitudinale en forme de U.

4. Portière (2) selon l'une des revendications 1 à 3, **caractérisée en ce qu'**elle comprend la serrure (16) sur la paroi arrière (4), la poignée de commande (18) sur la paroi extérieure (5) et un câble de commande (22) reliant la poignée (18) à la serrure (16), ledit câble (22) s'étendant majoritairement à hauteur de la portion centrale (30) du raidisseur (24).

5. Portière (2) selon l'une des revendications 1 à 4, **caractérisé en ce que** la ou les zones d'affaiblissement (32 ; 32') ont un moment quadratique en flexion inférieure à 50%, préférentiellement à 30%, du moment quadratique moyen du raidisseur (24) en dehors de la ou des zones d'affaiblissement (32 ; 32').

6. Portière (2) selon l'une des revendications 1 à 5, **caractérisée en ce que** le raidisseur (24) est à une distance de moins de 15cm, préférentiellement 10cm, de la zone de montage (20) de la poignée de commande (18).

7. Portière (2) selon l'une des revendications 1 à 6, **caractérisée en ce que** la portière (2) est une portière arrière, la paroi arrière (4) comprenant une portion supérieure (6) généralement droite et une portion inférieure (8) généralement courbée en vue d'épouser un passage de roue arrière de véhicule, le raidisseur (24) étant fixé à ladite portion inférieure (8).

8. Portière (2) selon l'une des revendications 1 à 7, **caractérisée en ce que** les extrémités (26, 26') du raidisseur (24) sont fixées aux bords latéral (11) et supérieur (7) de la portière (2), les zones d'affaiblissement (32 ; 32') étant situées à distance desdites extrémités (26, 26') de moins de 35% de la longueur (L) du raidisseur (24), préférentiellement de moins de 25%.

9. Portière (2) selon l'une des revendications 1 à 8, **caractérisée en ce que** le raidisseur (24) est en contact avec la face intérieure de la paroi extérieure (5).

## Patentansprüche

1. Kraftfahrzeugtür (2), die Folgendes umfasst:
- eine hintere Wand (4) mit einer Montagezone (14) eines Schlosses (16);
- eine Außenwand (5) mit einer Montagezone (20) eines manuellen Steuergriffs (18) des Schlosses (16) ;
- eine Versteifung (24), die sich entlang der Innenfläche der Außenwand (5) erstreckt;
**dadurch gekennzeichnet, dass**
sich die Versteifung (24) an der Vorderseite der Montagezone (20) des Steuergriffs (18) von der hinteren Wand (4) bis zu einem oberen Rand (7) der Außenwand (5) erstreckt und zwei Schwächungszonen (32; 32') auf jeder Seite eines zentralen Abschnitts (30) ohne Schwächungszone umfasst.

2. Tür (2) nach Anspruch 1, **dadurch gekennzeichnet, dass** die Schwächungszone oder Schwächungszonen (32, 32') von der Mitte der Versteifung (24) beabstandet liegen, bevorzugt in einem Abstand von der Mitte, der größer ist als ein Viertel der Gesamtlänge (L) der Versteifung.

3. Tür (2) nach einem der Ansprüche 1 und 2, **dadurch gekennzeichnet, dass** die Versteifung (24) ein Blechband mit Profilquerschnitt ist, wobei die oder mindestens eine der Schwächungszonen (32, 32') einen im Allgemeinen geraden Querschnitt und/oder einen Längsquerschnitt in U-Form aufweist.

4. Tür (2) nach einem der Ansprüche 1 bis 3, **dadurch gekennzeichnet, dass** sie das Schloss (16) auf der hinteren Wand (4), den Steuergriff (18) auf der Außenwand (5) und ein Steuerkabel (22), das den Griff (18) mit dem Schloss (16) verbindet, umfasst, wobei sich das Kabel (22) größtenteils in der Höhe des zentralen Abschnitts (30) der Versteifung (24) erstreckt.

5. Tür (2) nach einem der Ansprüche 1 bis 4, **dadurch gekennzeichnet, dass** die Schwächungszone oder die Schwächungszonen (32; 32') ein quadratisches Biegemoment kleiner als 50 %, bevorzugt als 30 % des mittleren quadratischen Moments der Versteifung (24) außerhalb der Schwächungszone(n) (32; 32') aufweisen.

6. Tür (2) nach einem der Ansprüche 1 bis 5, **dadurch gekennzeichnet, dass** die Versteifung (24) in einem Abstand von weniger als 15 cm, bevorzugt 10 cm von der Montagezone (20) des Steuergriffs (18) liegt.

7. Tür (2) nach einem der Ansprüche 1 bis 6, **dadurch gekennzeichnet, dass** die Tür (2) eine Hecktür ist, wobei die hintere Wand (4) einen oberen Abschnitt (6), der im Allgemeinen gerade ist, und einen unteren Abschnitt (8), der im Allgemeinen gebogen ist, um sich an einen hinteren Fahrzeugradlauf zu legen, umfasst, wobei die Versteifung (24) an dem unteren Abschnitt (8) befestigt ist.

8. Tür (2) nach einem der Ansprüche 1 bis 7, **dadurch gekennzeichnet, dass** die Enden (26, 26') der Versteifung (24) an dem Seiten- (11) und dem oberen Rand (7) der Tür (2) befestigt sind, wobei die Schwächungszonen (32; 32') von den Enden (26, 26') um weniger als 35 % der Länge (L) der Versteifung (24), bevorzugt weniger als 25 % entfernt sind.

9. Tür (2) nach einem der Ansprüche 1 bis 8, **dadurch gekennzeichnet, dass** die Versteifung (24) mit der Innenfläche der Außenwand (5) in Berührung ist.

## Claims

1. A motor vehicle door (2) including:
- a rear wall (4) with a mounting region (14) for mounting a lock (16);
- an exterior wall (5) with a mounting region (20) for mounting a handle (18) for manual operation of the lock (16);
- a stiffener (24) extending along the interior face of the exterior wall (5);
**characterized in that**
the stiffener (24) extends forward of the mounting region (20) for mounting the operating handle (18), from the rear wall (4) as far as an upper edge (7) of the exterior wall (5), and includes two regions (32; 32') of weakness on either side of a central portion (30) without a zone of weakness.

2. The door (2) according to Claim 1, **characterized in that** the region(s) of weakness (32, 32') are situated at a distance from the middle of the stiffener (24), preferably at a distance from the middle which is greater than one quarter of the total length (L) of the stiffener.

3. The door (2) according to one of Claims 1 and 2, **characterized in that** the stiffener (24) is a sheet metal strip of profiled cross-section, the or at least one of the regions of weakness (32, 32') having a generally straight cross-section and/or a U-shaped longitudinal section.

4. The door (2) according to one of Claims 1 to 3, **characterized in that** it includes the lock (16) on the rear wall (4), the operating handle (18) on the exterior wall (5) and an operating cable (22) connecting the handle (18) to the lock (16), said cable (22) extending predominantly at the height of the central portion (30) of the stiffener (24).

5. The door (2) according to one of Claims 1 to 4, **characterized in that** the regions (32; 32') of weakness have a quadratic moment in flexion less than 50 %, preferably than 30 %, of the mean quadratic moment of the stiffener (24) outside the regions (32; 32') of weakness.

6. The door (2) according to one of Claims 1 to 5, **characterized in that** the stiffener (24) is at a distance of less than 15 cm, preferably 10 cm, from the mounting region (20) of the operating handle (18).

7. The door (2) according to one of Claims 1 to 6, **characterized in that** the door (2) is a rear door, the rear wall (4) including a generally straight upper portion (6) and a generally curved lower portion (8) with the purpose of fitting the shape of a rear wheel arch of the vehicle, the stiffener (24) being fixed to said lower portion (8).

8. The door (2) according to one of Claims 1 to 7, **characterized in that** the ends (26, 26') of the stiffener (24) are fixed to the lateral (11) and upper (7) edges of the door (2), the regions (32; 32') of weakness being situated at a distance from said ends (26, 26') of less than 35 % of the length (L) of the stiffener (24), preferably of less than 25 %.

9. The door (2) according to one of Claims 1 to 8, **characterized in that** the stiffener (24) is in contact with the interior face of the exterior wall (5).
